(19) **Europäisches Patentamt / European Patent Office / Office européen des brevets**

(11) **EP 4 361 101 A1**

(12) # EUROPEAN PATENT APPLICATION
published in accordance with Art. 153(4) EPC

(43) Date of publication:
**01.05.2024 Bulletin 2024/18**

(21) Application number: **22828416.2**

(22) Date of filing: **21.06.2022**

(51) International Patent Classification (IPC):
**C01B 32/182** (2017.01)  **A61L 9/12** (2006.01)
**B82Y 30/00** (2011.01)  **C01B 32/19** (2017.01)
**C01B 32/225** (2017.01)  **C04B 35/52** (2006.01)
**C04B 38/00** (2006.01)  **C09K 3/00** (2006.01)

(52) Cooperative Patent Classification (CPC):
**A61L 9/12; B82Y 30/00; C01B 32/182;**
**C01B 32/19; C01B 32/225; C04B 35/52;**
**C04B 38/00; C09K 3/00;** Y02E 60/50

(86) International application number:
**PCT/JP2022/024712**

(87) International publication number:
**WO 2022/270500 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2021 JP 2021103552**

(71) Applicant: **Incubation Alliance, Inc.**
**Kobe-shi**
**Hyogo 651-0072 (JP)**

(72) Inventors:
• **MURAMATSU, Kazuo**
  **Kobe-shi, Hyogo 655-0016 (JP)**
• **TAKAHASHI, Kazuma**
  **Kobe-shi, Hyogo 651-1262 (JP)**
• **IWATA, Hidesato**
  **Kobe-shi, Hyogo 650-0026 (JP)**
• **SUTANI, Koichi**
  **Suita-shi, Osaka 564-0004 (JP)**
• **YABUMOTO, Hideaki**
  **Amagasaki-shi, Hyogo 661-0011 (JP)**

(74) Representative: **KIPA AB**
**Drottninggatan 11**
**252 21 Helsingborg (SE)**

(54) **GRAPHENE MATERIAL AND PRODUCTION METHOD THEREFOR**

(57) It is an object of the present invention to provide a graphene material that is lightweight, has a large retention capacity, and is useful as a base material for sustainedly releasing a non-aqueous component, and a method of producing the same. Provided is a graphene material having a total porosity of 60.0% or more and an open porosity of 50.0% or more.

FIG.3

EP 4 361 101 A1

**Description**

TECHNICAL FIELD

The present invention relates to a graphene material useful as a base material for retaining and sustainedly releasing a non-aqueous component, and a method of producing the same.

BACKGROUND ART

Since graphene has a large specific surface area, excellent electrical and thermal conductivity, and a low coefficient of thermal expansion, a graphene material containing graphene as a component has been expected to be applied in various fields (for example, Patent Document 1, etc.).

PRIOR ART DOCUMENT

Patent Document

Patent Document 1: JP 2014-507365 A

SUMMARY OF THE INVENTION

PROBLEM TO BE SOLVED BY THE INVENTION

Since various components such as fragrance, drug, lubricant, insecticide, nutrient, and the like that have been required for sustained release are mainly non-aqueous components and are lipophilic, it has been desirable that base materials for sustainedly releasing them are lipophilic as well. Moreover, it is desirable that the base materials have poor reactivity with a target component and that they are chemically stable. More specifically, those having a high heat resistance, a strong resistance to a strong acid and a strong alkali, a high weather resistance to sunlight and an ultraviolet ray, and not corroding and rotting even if they come in contact with moisture, salt, etc. for a long period of time have been desired. Furthermore, it has been desirable that the base materials have a large retention capacity which have a large number of open pores (spaces connected to the external environment) in order to retain more target components. Furthermore, it has been desirable that the base materials be as light as possible in order to reduce the total weight after retaining target components.

Since a metal material has a low resistance to a strong acid, a strong alkali, etc., and corrodes if it comes into contact with salt or the like for a long period of time, etc., it has a problem with chemical stability as a base material for sustained release, and it also has a high specific gravity, which makes it undesirable. Moreover, as ceramics-based materials, there are porous materials such as zeolite, $SiO_2$, alumina, SiC, and the like, but zeolite has a problem with chemical stability as it is used as a catalyst, and $SiO_2$, alumina, and SiC have a problem of having a high specific gravity and not being lightweight. Furthermore, as polymer-based absorbent materials, there are polyacrylates used in a disposable diaper or the like, but although they generally absorb large amounts of water, they have a problem of having low abilities to absorb and adsorb an oily component due to their hydrophilic nature and also have problems of low heat resistance and weather resistance.

Graphene and graphite, which are crystalline carbons, have very stable properties where they have high heat resistance and weather resistance, do not react to a strong acid and a strong alkali, and do not corrode at temperatures below 400°C. Moreover, each carbon atom constituting graphene and graphite forms an Sp2 hybrid orbital and has a structure linked by π bond, so that the graphene surface has a high ability to adsorb lipophilic components (liquid and solid) due to a strong van der Waals force (intermolecular attractive force). In particular, since the graphene surface has no functional groups containing oxygen and hydrogen such as a hydroxyl group, a carbonyl group, a carboxy group, and the like, it has a low hydrophilicity but a high lipophilicity. However, an isotropic graphite that is used as a general graphite (black lead) plate has problems of containing crystal defects, because it is made from a mixture of a plurality of raw materials to achieve a high strength, and of having a low porosity. Moreover, a carbon paper used for a fuel cell electrode or the like has a high porosity but uses a binder component in a manufacturing process, and therefore, it has a problem of containing crystal defects.

It is an object of the present invention to provide a graphene material that is lightweight, has a large retention capacity, and is useful as a base material for retaining and sustainedly releasing a non-aqueous component, and a method of producing the same.

MEANS TO SOLVE THE PROBLEM

As a result of intensive studies, the present inventors have found that, by using a graphene material with a total porosity of 60.0% or more and an open porosity of 50.0% or more, the above-described problems can be solved to provide a base material for retaining and sustainedly releasing a non-aqueous component, and that such a graphene material can be produced by heat-treating a thermally expandable graphite followed by pressure-molding and further predetermined open-pore treating, or heat-treating a thermally expandable graphite followed by pulverizing and further pressure-molding, and completed the present invention.

That is, the present invention relates to:

[1] A graphene material having a total porosity of 60.0% or more and an open porosity of 50.0% or more,

[2] The graphene material of [1] above, wherein a ratio G/D of a peak intensity G near 1600 $cm^{-1}$ to a peak intensity D near 1360 $cm^{-1}$ in laser Raman spectroscopy measurement is 10.0 or more,

[3] A base material for sustainedly releasing a non-aqueous component, the base material being composed of the graphene material of [1] or [2] above,

[4] A method of producing a graphene material having a total porosity of 60.0% or more and an open porosity of 50.0% or more, the method comprising the steps of:

(I-1) heat-treating a thermally expandable graphite to obtain a thermally expanded graphite;
(I-2) pressure-molding the thermally expanded graphite to obtain a pressure-molded body; and
(I-3) subjecting the pressure-molded body to open-pore treatment by heating to obtain a graphene material,

[5] The method of (4) above, wherein the step (I-1) comprises the steps of:

(I-1-a) preparing a vertically erected tube that is surrounded by a heater to be heated inside thereof by the heater;
(I-1-b) continuously supplying the thermally expandable graphite into the tube from the lower end of the tube on an air flow;
(I-1-c) converting the thermally expandable graphite into a thermally expanded graphite by heat-treating the thermally expandable graphite while the thermally expandable graphite passing from the bottom to the top inside the tube on an air flow; and
(I-1-d) continuously obtaining the thermally expanded graphite from the upper end of the tube,

[6] The method of [4] or [5] above, wherein the pressure-molded body obtained in the step (I-2) has an open porosity of less than 50.0%,

[7] A method of producing a graphene material having a total porosity of 60.0% or more and an open porosity of 50.0% or more, the method comprising the steps of:

(II-1) heat-treating a thermally expandable graphite to obtain a thermally expanded graphite;
(II-2) immersing the thermally expanded graphite in a solvent, subjecting it to crushing treatment, then collecting a supernatant, and separating the solvent from the supernatant to obtain a solid, followed by pulverizing the solid to obtain a pulverized body; and
(II-3) pressure-molding the pulverized body to obtain a graphene material,

[8] The method of [7] above, wherein the step (II-1) comprises the steps of:

(II-1-a) preparing a vertically erected tube that is surrounded by a heater to be heated inside thereof by the heater;
(II-1-b) continuously supplying the thermally expandable graphite into the tube from the lower end of the tube on an air flow;
(II-1-c) converting the thermally expandable graphite into a thermally expanded graphite by heat-treating the thermally expandable graphite while the thermally expandable graphite passing from the bottom to the top inside the tube on an air flow; and
(II-1-d) continuously obtaining the thermally expanded graphite from the upper end of the tube,

[9] The method of [7] or [8] above, further comprising the step (II-4) of subjecting the graphene material to open-pore treatment by heating to obtain an open-pore body of the graphene material,

[10] A method of producing a thermally expanded graphite, the methods comprising the steps of:

(a) preparing a vertically erected tube that is surrounded by a heater to be heated inside thereof by the heater;

(b) continuously supplying a thermally expandable graphite into the tube from the lower end of the tube on an air flow;

(c) converting the thermally expandable graphite into a thermally expanded graphite by heat-treating the thermally expandable graphite while the thermally expandable graphite passing from the bottom to the top inside the tube on an air flow; and

(d) continuously obtaining the thermally expanded graphite from the upper end of the tube,

EFFECTS OF THE INVENTION

According to the present invention, a graphene material that is lightweight, has a large retention capacity, and is useful as a base material for retaining and sustainedly releasing a non-aqueous component can be provided. Moreover, according to the present invention, a producing method of producing such a graphene material, particularly a producing method with a high throughput can be provided.

BRIEF DESCRIPTION OF THE DRAWINGS

FIG. 1 shows a longitudinal sectional view and a top view of a heating unit constituting a continuous processing system capable of continuously heating a thermally expandable graphite.

FIG. 2 is a longitudinal sectional view of the heating unit shown in FIG. 1, showing a state where a raw material-supplying unit is installed at the bottom of the heating unit and an air hood is installed at the top of the heating unit.

FIG. 3 is a view showing a state where a pulse air by a pulse air member is turned off (left side) and turned on (right side) in FIG. 2.

FIG. 4 is a view showing an example of a collecting unit.

FIG. 5 is a graph showing results of survivability tests.

FIG. 6 is a graph showing results of laser Raman spectroscopy measurements.

EMBODIMENT FOR CARRYING OUT THE INVENTION

A first aspect of the present disclosure is a graphene material having a total porosity of 60.0% or more and an open porosity of 50.0% or more.

A second aspect of the present disclosure is a base material for retaining and sustainedly releasing a non-aqueous component, the base material being composed of a predetermined graphene material.

A third aspect of the present disclosure is a method of producing a graphene material having a total porosity of 60.0% or more and an open porosity of 50.0% or more, the method comprising the steps of:

(I-1) heat-treating a thermally expandable graphite to obtain a thermally expanded graphite;

(I-2) pressure-molding the thermally expanded graphite to obtain a pressure-molded body; and

(I-3) subjecting the pressure-molded body to open-pore treatment by heating to obtain a graphene material.

A fourth aspect of the present disclosure is a method of producing a graphene material having a total porosity of 60.0% or more and an open porosity of 50.0% or more, the method comprising the steps of:

(II-1) heat-treating a thermally expandable graphite to obtain a thermally expanded graphite;

(II-2) immersing the thermally expanded graphite in a solvent, subjecting it to crushing treatment, then collecting a supernatant, and separating the solvent from the supernatant to obtain a solid, followed by pulverizing the solid to obtain a pulverized body; and

(II-3) pressure-molding the pulverized body to obtain a graphene material.

A fifth aspect of the present disclosure is a method of producing a thermally expanded graphite, the methods comprising the steps of:

(a) preparing a vertically erected tube that is surrounded by a heater to be heated inside thereof by the heater;

(b) continuously supplying a thermally expandable graphite into the tube from the lower end of the tube on an air flow;

(c) converting the thermally expandable graphite into a thermally expanded graphite by heat-treating the thermally expandable graphite while the thermally expandable graphite passing from the bottom to the top inside the tube on an air flow; and

(d) continuously obtaining the thermally expanded graphite from the upper end of the tube.

<Definition>

(Total porosity)

A total porosity is a ratio of a volume of all pores (including open pores as well as closed pores) present in a volume calculated from an external shape of a material. In the present specification, the total porosity is calculated using the following equation specified in JIS R 7212 (Testing Method for Carbon Block). Here, any of units of specific gravity is $g/cm^3$. As a test piece, a molded body produced with a mold having an inner diameter of $\varphi$25 mm and cut into a predetermined thickness is used, unless otherwise specified.

Total porosity (%) = {(true specific gravity - bulk specific gravity)/true specific gravity} × 100.

In the above-described equation, as the true specific gravity, 2.26 $g/cm^3$ that is a theoretical value of graphite is used. The bulk specific gravity is calculated by dividing a weight of the test piece by a volume thereof. Here, the weight of the test piece is measured using a precision electronic balance with a measurement accuracy of 1 mg (manufactured by AS ONE Corporation). On the other hand, a volume of the test piece is calculated from a thickness and an outer diameter of the molded body. The thickness of the test piece is measured using a Digimatic Standard Outside Micrometer with a measurement accuracy of 1 $\mu$m (manufactured by Mitutoyo Corporation). The outer diameter of the test piece is measured using a Super Caliper with a measurement accuracy of 10 $\mu$m (manufactured by Mitutoyo Corporation).

(Open porosity)

An open porosity is a ratio of a volume of pores present in a volume calculated from an external shape of a material, into which pores liquid, gas, etc. can enter. The open porosity is calculated using the following equation.

Open porosity (%) = total porosity (%) - closed porosity (%).

(Closed porosity)

A closed porosity is a ratio of a volume of closed pores in a material present in a volume calculated from an external shape of the material. The closed porosity is calculated using the following equation.

Closed porosity (%) = {(true specific gravity - apparent specific gravity)/true specific gravity} × 100.

Here, true specific gravity is as described above. The apparent specific gravity is measured, for a test piece, by a gas replacement method with a helium gas using MUPY-30-T manufactured by Quantachrome Instruments. That is, a non-porous metal sphere with a diameter of 10 mm is used for calibration of a device. Moreover, in order to reduce an influence of an adsorbed component for a measurement sample, the test piece is left in a dryer at 150°C for 60 minutes, and measurement is performed after leaving it to be cooled in a desiccator. The test piece is fractionated in a measurement cell, and its weight is accurately weighed by the unit of 0.1 mg. Then, the test piece is set in the device and a volume of the test piece is measured. The measurement of the volume is repeated until it becomes stable, and three most recent measurements in which a deviation becomes 0.05% or less are averaged and used as a volume of the sample. The apparent specific gravity is obtained by calculation from the measured volume and the calculated weight.
Besides, an apparent specific gravity, a bulk specific gravity, and a true specific gravity are synonymous with an apparent density, a bulk density, and a true density, respectively.

(Amount of closed pore)

From the measured bulk specific gravity and open porosity, an amount of open pores per unit weight and an amount of open pores per unit volume can be calculated by the following equations.

Amount of open pore ($cm^3$/g) = (1/bulk specific gravity) × open porosity (%)/100

$$\text{Amount of open pore (cm}^3\text{/cm}^3\text{)} = \text{open porosity (\%)/100.}$$

Laser Raman spectroscopy measurement is performed by the method described in Examples section below.

In the present invention, numerical values of upper limits and lower limits relating to "or more", "or less", and "to" for descriptions of numerical ranges are numerical values that can be arbitrarily combined, and additionally, numerical values in Examples can be combined with the upper limits and the lower limits. In addition, when a numerical range is specified by using "to", it means to include numerical values of both ends, unless otherwise specified. Furthermore, in the present disclosure, the numerical range shown to include the values of both ends is interpreted as simultaneously showing a numerical range not including the value of one end among the values of both ends, and further, a numerical range not including both values of both ends, unless contrary to the purpose of the present disclosure.

<Graphene material>

The first aspect of the present disclosure will be described below.

A graphene material is a carbon material containing graphene as a constituent element. Here, graphene chemically refers to a sheet-like structure of a carbon atom with a one-atom thickness which is bonded by an Sp2 hybridized orbital, but the graphene material of the present disclosure is not limited to one consisting of a single layer of graphene, and also includes a multilayer graphene stacked in two or more layers as its constituent element. Here, the "multilayer" refers to, for example, 2 layers to about 100,000 layers, preferably 10,000 layers or less, more preferably 1,000 layers or less.

In the present disclosure, the graphene material has an excellent crystallinity. Here, the excellent crystallinity means that there are few, almost no, or no crystal defects. Moreover, a graphene material with few crystal defects means that a carbon atom constituting the graphene material is bonded by forming an Sp2 hybrid orbital, and there are small or almost no, or no proportion of carbon atoms bonded by forming an Sp3 hybrid orbital.

(G/D)

Crystallinity of the graphene material of the present disclosure can be expressed as a ratio G/D of a peak intensity G near 1600 cm$^{-1}$ to a peak intensity D near 1360 cm$^{-1}$ in laser Raman spectroscopy measurement. Here, G is a peak intensity based on an Sp2 hybridized orbital of graphene, and D is a peak intensity based on an Sp3 hybridized orbital of graphene. A value of G/D is preferably 10.0 or more, more preferably 15.0 or more, further preferably 20.0 or more, further preferably 25.0 or more, further preferably 30.0 or more, further preferably 35.0 or more, further preferably 40.0 or more, further preferably 45.0 or more, from the viewpoint of effects of the present disclosure. An upper limit for the value of G/D is not particularly limited, and the higher the value is, the higher the crystallinity is, which is desirable from the viewpoint of the effects of the present disclosure. The value of G/D can also take a value of about 300, for example.

(Total porosity)

The graphene material of the present disclosure has a total porosity of 60.0% or more. The higher the total porosity is, the more finely divided the inside of the molded body tends to be, resulting in a structure in which the graphene surface is exposed, and the more the sustained release effect tends to be enhanced. On the other hand, when the total porosity is less than 60%, the graphene surface tends to be insufficiently exposed, and the base material cannot be lightweight. The total porosity is preferably 65.0% or more, more preferably 70.0% or more, further preferably 75.0% or more, further preferably 80.0% or more, further preferably 85.0% or more, further preferably 90.0% or more, from the viewpoint of the effects of the present disclosure.

(Open porosity)

The graphene material of the present disclosure has an open porosity of 50.0% or more. This means that the graphene material has a high proportion of pores leading to the outside (open porosity) in addition to having a high total porosity. This provides a high sustained release effect. When the open porosity is less than 50%, a sufficient retention capacity as a base material cannot be achieved. The open porosity is preferably 53.0% or more, more preferably 60.0% or more, further preferably 65.0% or more, further preferably 70.0% or more, further preferably is 75.0% or more, more preferably 77.0% or more, from the viewpoint of the effects of the present disclosure.

<Base material for sustained release>

The graphene material of the present disclosure is useful as a base material for retaining and sustainedly releasing a non-aqueous component.

(Non-aqueous component)

A non-aqueous component is a component whose main constituent is not water, which may be liquid, solid, or gas at a normal temperature. Examples of the non-aqueous component include, for example, lipophilic components that are liquid, solid, or gas at a normal temperature, typically lipophilic components that are liquid or solid at a normal temperature.

Moreover, the non-aqueous component is preferably a component intended to be sustained released, and examples of such a non-aqueous component include compositions having various functions such as, for example, a fragrance composition, a pharmaceutical composition, a lubricant composition, an insecticidal composition, a nutrient composition, and the like. Alternatively, the non-aqueous component may be an active component contained in these compositions.

(Sustained release)

In the present disclosure, the non-aqueous component is accommodated and retained in the base material, and then sustainedly released. Here, the sustained release means that the non-aqueous component is gradually released from the base material. A preferred degree of sustained release may vary depending on characteristics, application, etc. of a formulation containing the non-aqueous component as an active component.

<Method I of producing graphene material>

Hereinafter, a method I of producing a graphene material, which is the second aspect of the present invention, will be explained.

(Step (I-1))

The step (I-1) is a step of heat-treating a thermally expandable graphite to obtain a thermally expanded graphite.

<<Thermally expandable graphite>>

The thermally expandable graphite used as a raw material is not particularly limited as long as interlayers of a flaky graphite are expanded by heat treatment to obtain a thermally expanded graphite. Specific examples of such graphite include a thermally expandable graphite intercalation compound.

The graphite intercalation compound is a compound in which an intercalation substance such as an oxidizing agent and the like is put into the space between graphite layers utilizing a chemical reaction. When it is heated, the interlaminar substance is decomposed and gasified, so that this pressure causes a hexagonal plate-like crystal of graphite to expand greatly in a vertical-axis direction, obtaining a thermally expanded graphite. Examples of the intercalation substance include, for example, sulfuric acid and the like. As the thermally expandable graphite, a commercially available graphite can be used, for example, a thermally expandable graphite, TEG (Thermally Expandable Graphite) manufactured by AIR WATER INC., etc.

<<Heat treatment>>

Heat treatment of the thermally expandable graphite can be appropriately performed without particular limitation, depending on a type of the thermally expandable graphite, as long as it enables the thermally expandable graphite to sufficiently thermally expand. For example, in a case of using a thermally expandable graphite, TEG (SS-3) manufactured by AIR WATER INC., if the thermally expandable graphite loaded in a graphite crucible is retained for 10 minutes in an electric furnace set at an internal temperature of 750°C, a thermally expanded graphite that has expanded several hundred times in a thickness direction of a graphite particle can be obtained.

<<Thermally expanded graphite>>

The thermally expanded graphite obtained above preferably has a tap density of less than 0.10 g/cm$^3$ as an

indicator that thermal expansion has been sufficiently performed. The tap density is more preferably $0.09 \text{ g/cm}^3$ or less, further preferably $0.08 \text{ g/cm}^3$ or less, further preferably $0.05 \text{ g/cm}^3$ or less, further preferably $0.03 \text{ g/cm}^3$ or less. On the other hand, a lower limit of the tap density is not particularly limited, but is usually $0.01 \text{ g/cm}^3$ or more.

Here, the tap density is a value determined by measuring a weight of a sample in a measuring cup having a predetermined volume and dividing the measured value by the volume of the cup. The sample is prepared by collecting the obtained thermally expanded graphite in the measuring cup, rubbing off the top of the cup using a glass rod with an outer diameter of 10 mm, and removing excess thermally expanded graphite. The sample weight is measured with a scale.

The thermally expanded graphite thus obtained can be used as it is in the next step.

(Step (I-2))

The step (I-2) is a step of pressure-molding the thermally expanded graphite to obtain a pressure-molded body.

<<Pressure molding>>

Pressure molding of the thermally expanded graphite can be performed by a conventional method, for example, by using a mold. In a case of pressure molding using a mold, a bulk density of the obtained pressure-molded body can be adjusted by adjusting an amount of thermally expanded graphite to be charged into the mold and a thickness of the pressure-molded body to be obtained. As a method of pressure molding, a powder molding method, a rubber molding method, a vacuum molding method, and the like that have been commonly performed can be applied. The bulk density $(\text{g/cm}^3)$ of the pressure-molded body is a value that correlates with a total porosity (%) of the pressure-molded body. That is, if the bulk density is high, the total porosity tends to be low, and if the bulk density is low, the total porosity tends to be high. In the present disclosure, the bulk density of the pressure-molded body in this step is usually $0.100 \text{ g/cm}^3$ to $0.800 \text{ g/cm}^3$. Therefore, pressure molding is performed by adjusting the amount of thermally expanded graphite to be charged into the mold and the thickness of the pressure-molded body to be obtained so that the bulk density of the pressure-molded body is within the above-described range.

Moreover, in the present disclosure, the open porosity of the pressure-molded body in this step is usually less than 50%.

(Step (I-3))

The step (I-3) is a step of subjecting the pressure-molded body to open-pore treatment by heating to obtain a graphene material.

<<Open-pore treatment>>

Open-pore treatment can be performed by heating the pressure-molded body in the air at a temperature equal to or higher than a predetermined temperature. In a microstructure constituting closed pores of the pressure-molded body, carbon, which is a constituent thereof, combines with oxygen, moisture, etc. in the air by heating, generating a gas such as CO, $CO_2$, and the like to be diffused, so that it is considered that the closed pores become open pores.

Examples of a heating condition include a temperature rising rate, a maximum arrival temperature, and a retention time at the maximum arrival temperature, which are appropriately adjusted from the viewpoint that the gasification of carbon and its diffusion proceed moderately. For example, the temperature rising rate is preferably in a range of $2°C/\text{min}$ to $20°C/\text{min}$, more preferably in a range of $5°C/\text{min}$ to $15°C/\text{min}$, further preferably in a range of $8°C/\text{min}$ to $12°C/\text{min}$. The maximum arrival temperature is preferably in a range of $400°C/\text{min}$ to $800°C/\text{min}$, more preferably in a range of $450°C/\text{min}$ to $700°C/\text{min}$, further preferably in a range of $500°C/\text{min}$ to $650°C/\text{min}$. The retention time is preferably in a range of 10 minutes to 60 minutes, more preferably in a range of 15 minutes to 50 minutes, further preferably in a range of 20 minutes to 40 minutes.

A graphene material can be obtained from the pressure-molded body by open-pore treatment.

(Step (1-1-a) to step (1-1-d))

The step (I-1) can be performed as a step including the following steps (I-1-a) to (I-1-d), if desired. By doing so, an advantage that thermally expanded graphites can be obtained continuously, as well as an advantage that the production efficiency is dramatically increased compared with the case of step (1-1), can be obtained. For example, as will be explained in the section of Production example 4 below, a processing speed in the step (1-1) is about 5 g/hour, i.e., about 0.08 g/min, whereas a processing speed in the steps (I-1-a) to (I-1-d) improves to be about 20 g/min. Moreover, as will be explained in the section of "Comparison between Example 1 and Example 4" below, the steps (I-1-a) to (I-1-d) have characteristic that they more easily produce the thermally expanded graphites having open pores than the step (1-1).

<<Step (I-1-a)>>

The step (I-1-a) is a step of preparing a vertically erected tube heated inside by a heater that surrounds the tube.
Any material and any shape can be applied for the tube that is surrounded by a heater, stands vertically and constitutes a heating unit as long as heating of a thermally expandable graphite, a raw material, can be appropriately performed. As a material of such a tube, for example, a quartz glass is preferable. Moreover, as a shape of the tube, for example, a cylindrical shape is preferable from the viewpoint of a uniform heating of the raw material. Furthermore, an inner diameter and a length of the tube may be appropriately set so that the raw material can appropriately pass through the inside of the tube and be heated appropriately.

<<Step (I-1-b)>>

The step (I-1-b) is a step of continuously supplying the thermally expandable graphite into the tube from the lower end of the tube on an air flow. A method of supplying the raw material into the tube is not particularly limited as long as the raw material can be continuously supplied into the tube on an air flow.
For example, a raw material-supplying unit for supplying raw materials may be installed at the bottom of the heating unit. The raw material-supplying unit comprises, for example, a raw material-charging means for charging raw materials into the unit (e.g., a raw material hopper), a raw material-transferring means for transferring raw materials from the raw material-charging means to the bottom of the heating unit (e.g., a screw type raw material feeder), a raw material-projecting means for projecting raw materials from the terminal end of the raw material-transferring means toward the bottom of the heating unit to create updraft (e.g., a pulse air member that projects and raises raw materials upward on a pulse air by switching from OFF to ON). Besides, a plurality of raw material-supplying units and heating units (also collectively referred to as a "raw material-supplying/heating unit") may be installed.

<<Step (I-1-c)>>

The step (I-1-c) is a step of converting the thermally expandable graphite into a thermally expanded graphite by heat-treating the thermally expandable graphite while the thermally expandable graphite passing from the bottom to the top inside the tube on an air flow. The heat treatment can be controlled by a raw material-supplying rate (g/min), an average flow rate ($m^3$/min) of an upward airflow in the tube, and a heating temperature by the heater.
For example, for a heating unit used in Examples below, a raw material-supplying rate is preferably in a range of 15 to 25 g/min, more preferably in a range of 17 to 23 g/min, further preferably in a range of 19 to 21 g/min. Moreover, an average flow rate of airflow in the tube is preferably in a range of 0.50 to 2.50 $m^3$/min, more preferably in a range of 0.80 to 2.20 $m^3$/min, further preferably in a range of 1.00 to 2.00 $m^3$/min. Furthermore, a heating temperature by the heater is preferably in a range of 600 to 1500°C, more preferably in a range of 700 to 1300°C, further preferably in a range of 800 to 1100°C.

<<Step (I-1-d)>>

The step (I-1-d) is a step of continuously obtaining the thermally expanded graphite from the upper end of the tube. The step can be performed without particular limitation as long as thermally expanded graphites can be collected from the upper end of the tube.
For example, a collecting unit may be installed at the top of the heating unit for collecting thermally expanded graphites that have passed through the heating unit and expanded. The collecting unit may comprise a collecting means (e.g., an air hood) for receiving thermally expanded graphites that have passed through the heating unit. Moreover, the collecting unit may further transfer thermally expanded graphites sucked up from the heating unit on an air flow, separate them from the air flow using a filter, etc., and accumulate them to collect. On the other hand, exhaust gases from which thermally expanded graphites have been separated are preferably passed through a device for removing sulfur oxides and nitrogen oxides (e.g., a scrubber) before being released into the atmosphere.

<<Continuous processing system>>

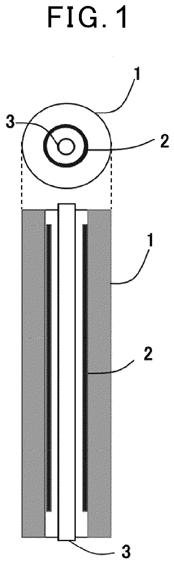

FIGS. 1 to 4 illustrate one example of a system for performing the steps (I-1-a) to (I-1-d). However, the present disclosure is not limited to these illustrations.

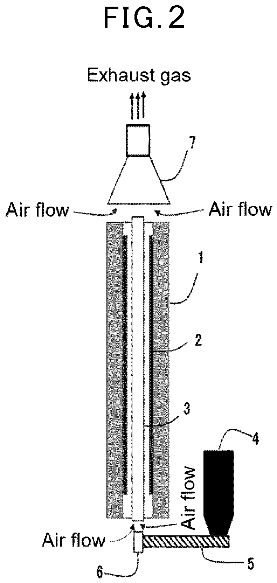

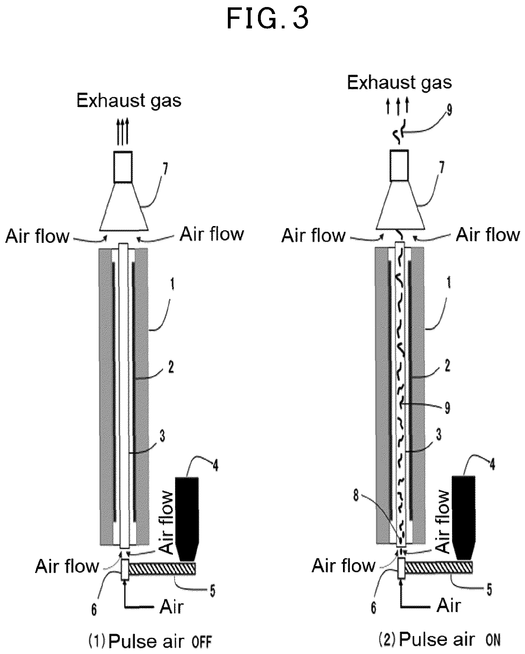

FIG. 1 is one example of a heating unit (A). There is a vertical tubular electric furnace (1) in which a quartz glass tube (3) is inserted in the center thereof, and a heater (2) is installed so as to surround the quartz glass tube (3). Moreover, in FIG. 2, a raw material-supplying unit (B) is installed at the bottom of the heating unit, and an air hood (7), which is a part of the collecting means for receiving thermally expanded graphites, is installed at the top of the heating unit (A). The raw material-supplying unit (B) is equipped with a raw material hopper (4) into which raw materials are charged, a screw type raw material feeder (5) for transferring raw materials from the bottom of the raw material hopper (4) to the bottom of the heating unit (A), and a pulse air member (6) for projecting raw materials upward by turning on and off the air, the pulse air member (6) being located at the tip of the screw type raw material feeder (5) and at the bottom of the quartz glass tube (3). Since an exhaust volume of an exhaust pipe is sufficient, the airflow is also set to be taken in from the space in the bottom of the quartz glass tube (3) and spaces between the air hood (7) and the top of the heating unit. Therefore, raw materials that have projected from the tip of the pulse air member (6) in a controlled manner are sucked from the bottom of the quartz glass tube (3), pass through the inside of the quartz glass tube (3) while expanding with radiant heat from the heater (2), and are easily sucked into the air hood (7) and the exhaust pipe connected thereto as the thermally expanded graphites after the expansion are very bulky. FIG. 3 shows a state where the pulse air is OFF (left figure) and a state where the pulse air is ON (right figure). The figure shows a situation where a raw material projects by turning on the pulse air to pass through the inside of the quartz glass tube on an upward airflow.

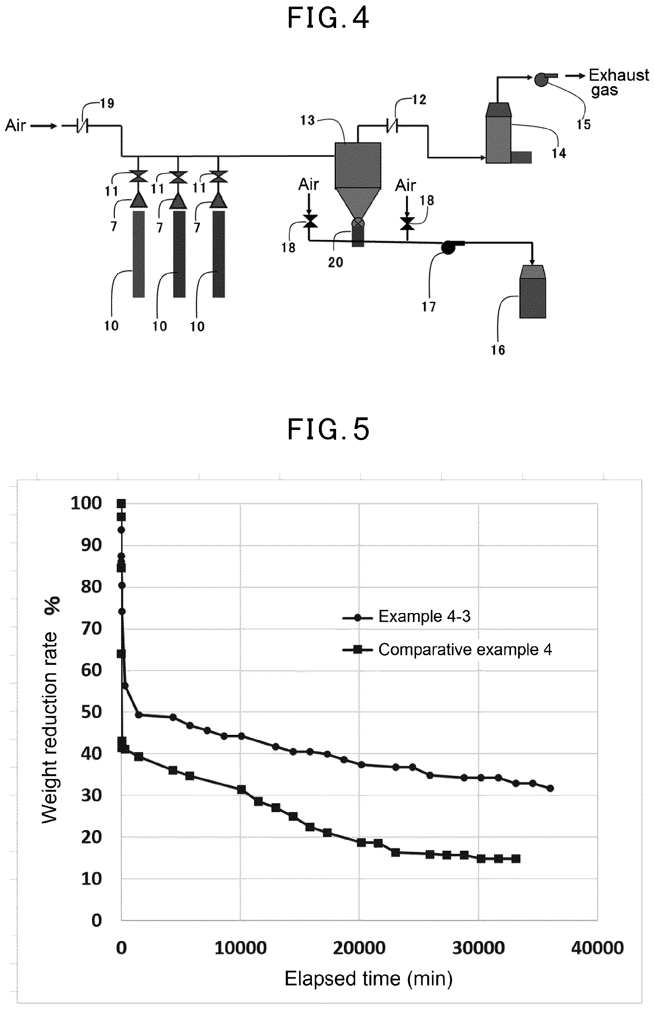

FIG. 4 shows one example of a collecting unit (C). In the collecting unit, three rows of heating units (A) are installed at the bottom of the air hood (7), respectively (the raw material-supplying unit (B) is not shown). In the collecting unit (C), the air hood (7) is connected to an exhaust system via a system damper (11) at the top thereof. An air suction force of the heating unit (A) is adjusted mainly by an exhaust fan (15), a dilution air damper (19), the system damper (11), and an air volume adjustment damper (12). The exhaust system is coupled with a bag filter (13) for separating an expanded thermally expanded graphite from an exhaust gas and a scrubber (14) for treating a sulfur oxide, a nitrogen oxide, etc. in the exhaust gas. The bag filter (13) is a device that separates a thermally expanded graphite, which is a floating substance in the exhaust gas, from an exhaust air flow and retains it at the bottom. As a filter, a cloth filter similar to a filter of a household vacuum cleaner can be used. A rotary valve (20) is installed at the bottom of the bag filter (13), and the thermally expanded graphite is transferred to a storage container bag (16) by a product transporting blower (17), independently of an exhaust flow of the bag filter, and collected. A collecting speed of thermally expanded graphites is adjusted by the number of rotations of the rotary valve (20) and a transport system bumper (18).

<Method II of producing graphene material>

Hereinafter, a method II of producing a graphene material, which is the third aspect of the present invention, will be explained.

(Step (II-1))

The step (II-1) is a step of heat-treating a thermally expandable graphite to obtain a thermally expanded graphite. Since the step (II-1) is the same as the step (I-1) of the Production method I, the above-described description of the step (I-1) can also apply to this step (II-1) as it is.

(Step (II-2))

The step (II-2) is a step of immersing the thermally expanded graphite in a solvent, subjecting it to crushing treatment, then collecting a supernatant, and separating the solvent from the supernatant to obtain a solid, followed by pulverizing the solid to obtain a pulverized body.

<<Immersion in solvent>>

Immersion of thermally expanded graphites in a solvent can be performed by a conventional method. As the solvent, those commonly used in this field can be used, examples of which include, for example, 1,2 dichloroethane, benzene, thionyl chloride, acetyl chloride, tetrachloroethylene carbonate, dichloroethylene carbonate, benzoyl fluoride, benzoyl chloride, nitromethane, nitrobenzene, acetic anhydride, phosphorous oxychloride, benzonitrile, selenium oxychloride, acetonitrile, tetramethylsulfone, dioxane, carbonic acid-1,2-propanediol, benzyl cyanide, ethylene sulfite, isobutyronitrile, propionitrile, carbonic acid esters such as dimethyl carbonate, propylene carbonate, ethyl methyl carbonate, ethylene carbonate, and the like, phenyl phosphite difluoride, methyl acetate, n-butyronitrile, acetone, ethyl acetate, water, phenyl phosphate dichloride, diethyl ether, tetrahydrofuran, diphenyl phosphate chloride, trimethyl phosphate, tributyl phosphate, dimethyl formamide, N-methylpyrrolidine, n-dimethylacetamide, dimethyl sulfoxide, N-diethylformamide, N-diethylacetamide, pyridine, hexamethylphosphoric acid amide, hexane, carbon tetrachloride, diglyme, trichloromethane, alcohols such as isopropyl alcohol, methanol, ethanol, propanol, ethylene glycol, and the like, methyl ethyl ketone, 2-methoxyethanol, dimethylacetamide, toluene, polybenzimidazole, and the like. These solvents can be used alone, or two or more thereof can be used in combination. Moreover, a dispersant can be added in advance to these solvents in order to prevent aggregation, and examples of such a dispersant include a surfactant and the like.

<<Crushing treatment»

A mixture of a thermally expanded graphite and a solvent is subjected to crushing treatment. Pulverization of the mixture can be performed using a mechanical pulverizer, a mixer, a blender, a ball mill, a vibration mill, an ultrasonic mill, a homogenizer, an ultrasonic homogenizer, an ultrasonic crusher, or the like. Moreover, after crushing, it is preferable to apply an ultrasonic wave in order to prevent crushed materials from aggregating. A means for applying an ultrasonic wave is not particularly limited, and can be performed using, for example, an ultrasonic homogenizer. In this way, a mixed liquid in which crushed materials are dispersed (graphene dispersion liquid) can be obtained.

<<Collection of supernatant and solvent separation>>

The mixed liquid, in which crushed materials are dispersed, obtained through the above-described treatment is left to stand for a predetermined period of time, then a supernatant is collected, and a solvent is separated from the supernatant, whereby a solid (graphene aggregate) consisting of crushed materials of thermally expanded graphites can be obtained. The time for leaving it to stand may vary depending on a type of a solvent used, a type of a dispersant, etc., but for example, it is preferably 8 hours or more, more preferably 10 hours or more, further preferably 12 hours or more. The step of separating the solvent from the supernatant to obtain a solid can be performed, for example, by filtration followed by drying, etc. Filtration can be performed more efficiently by conducting vacuum filtration. Moreover, drying can be performed, for example, by air drying at room temperature and then heat drying, etc. Air drying at room temperature is, but not particularly limited to, for example, preferably 3 hours or more, more preferably 4 hours or more, further preferably 5 hours or more. Heat drying can be performed using, for example, an electric furnace, etc. For example, it is performed preferably at 90°C for 6 hours or more, more preferably at 90°C for 7 hours or more, further preferably at 90°C for 8 hours or more.

<<Pulverization>>

The solid thus obtained can be pulverized to obtain a pulverized body. Pulverization is not particularly limited and can be performed by a conventional method. For example, the pulverization can be performed using a pulverizer. When a universal pulverizer (M20, manufactured by AS ONE Corporation) is used as the pulverizer, a pulverization time is preferably 10 minutes or more, more preferably 12 minutes or more, further preferably 15 minutes or more.

(Step (II-3))

The step (II-3) is a step of pressure-molding the pulverized body to obtain a graphene material. This pressure molding can be performed in the same manner as in the step (I-2), that is, it can be performed by setting an amount of a pulverized body to be charged into the mold and a targeted thickness within appropriate ranges. However, in this pressure molding, the pulverized body is used as a raw material instead of a thermally expanded graphite, and therefore a graphene material can be directly obtained.

(Step (II-4))

The step (II-4) is a step of further subjecting the graphene material to open-pore treatment by heating to obtain an open-pore body of the graphene material. The step (II-4) can be performed in the same manner as the open-pore treatment in the step (I-3) of the Production method I.

(Step (II-1-a) to Step (II-1-d))

The step (II-1-a) to the step (II-1-d) are the same as the step (I-1-a) to the step (I-1-d) of the Production method I of the graphene material, and therefore the above-described explanations of the step (I-1-a) to the step (I-1-d) and the above-described explanations of the continuous processing system using such steps are also applied to the step (II-1-a) to the step (II-1-d) as they are.

<Method of producing thermally expanded graphite>

The step (a) to the step (d) relating to the method of producing a thermally expanded graphite are the same as the step (I-1-a) to the step (I-1-d) of the Production method I of the graphene material, and therefore the above-described explanations of the step (I-1-a) to the step (I-1-d) and the above-described explanations of the continuous processing system using such steps are also applied to the step (a) to the step (d) as they are.

<Application>

The graphene material thus obtained is lightweight due to its high total porosity, has a large retention capacity due to its high open porosity, and further exhibits lipophilicity due to its graphene surface, so that it is useful as a base material for sustainedly releasing a non-aqueous component.

EXAMPLE

The present invention will be described below with reference to Examples, but it is not limited to these Examples.

<Material used in experiment>

Thermally expandable graphite: Thermally expandable graphite TEG (SS-3) (graphite intercalation compound, manufactured by AIR WATER INC.)
Isotropic graphite: MGY-72 (manufactured by TOHO CARBON CO.,LTD.)
Carbon paper: 24AA (manufactured by SGL Carbon)
Filter paper: Qualitative filter paper No.1 (manufactured by ADVANTEC TOYO KAISHA, LTD.)
Fragrance: Aroma essence blue label white musk (manufactured by Global Product Planning Co., Ltd.)
Anti-rust lubricant: MBN (available from MonotaRO Co., Ltd.)
Machine oil emulsion: King 95 machine (manufactured by King Engei Co., Ltd.)

Production example 1 (production of thermally expanded graphite)

5 g of thermally expandable graphite (SS-3) was loaded into a graphite crucible, charged into an electric furnace with a furnace temperature set at 750°C, and held for 10 minutes to obtain 4.5 g of thermally expanded graphite that has expanded several hundred times in the thickness direction of the graphite particle. Besides, the obtained thermally expanded graphite was collected in a plastic measuring cup with a volume of 100 cm$^3$, and the top of the cup was rubbed off using a glass rod with an outer diameter of 10 mm to remove excess thermally expanded graphite, resulting in a volume of 100 cm$^3$. Then, using an analytical electronic balance HTR-80 (manufactured by SHINKO DENSHI CO.,LTD., analytical accuracy: 0.1 mg), a weight of 100 cm$^3$ of expanded graphite was measured. A tap density was calculated by dividing the measured weight by the volume (100 cm$^3$) and found to be 0.018 g/cm$^3$.

Production example 2 (production of pressure-molded body of thermally expanded graphite)

According to Table 1, a predetermined amount of thermally expanded graphite as obtained above was filled in a mold having an inner diameter of Φ25 mm, and a mold spacer is used to adjust a thickness of a targeted pressure-molded body to produce a pressure-molded body. The bulk density, etc. of the pressure-molded body could be sufficiently controlled by adjusting an amount of material to be charged and the thickness of the pressure-molded body.

Table 1

|  | Production example | | |
| --- | --- | --- | --- |
|  | 2-1 | 2-2 | 2-3 |
| Raw material (thermally expanded graphite) Production example | 1 | 1 | 1 |
| Pressure-molding treatment Amount of thermally expanded graphite to be charged (g) | 0.10 | 0.20 | 0.27 |

(continued)

| Pressure-molding treatment | | | |
|---|---|---|---|
| Thickness (mm) | 1.4 | 1.3 | 1.3 |
| Pressure-molded body | | | |
| Bulk density (g/cm$^3$) | 0.138 | 0.312 | 0.409 |
| Apparent density (g/cm$^3$) | 0.758 | 0.952 | 1.345 |
| Total porosity (%) | 93.9 | 86.2 | 81.9 |
| Closed porosity (%) | 66.5 | 57.9 | 40.5 |
| Open porosity (%) | 27.4 | 28.3 | 41.4 |

Production example 3 (production of pulverized body of thermally expanded graphite)

4 g of thermally expanded graphite as obtained above was immersed in 500 ml of isopropyl alcohol in a glass beaker and subjected to a crushing treatment for 15 minutes × 8 times with the number of rotations at 12,500 rpm using a universal homogenizer (Physcotron NS52, manufactured by MICROTEC CO., LTD.). An ultrasonic oscillator of an ultrasonic homogenizer (US300T, manufactured by NIPPON SEIKI CO., LTD.) was charged into the crushed product, which was subjected to an ultrasonic treatment for 10 minutes × 20 times at an output of 70% to pulverize a thermally expanded graphite particle (into graphene). The obtained mixed liquid was left to stand for 12 hours, and the supernatant was collected to obtain a graphene dispersion liquid. 50 g of the obtained graphene dispersion liquid was collected in an aluminum cup whose surface was alumite-treated, a weight of a solid content after retaining it at 90°C for 20 hours was measured, and the solid content was calculated from a weight ratio of the dispersion liquid and found to be 0.8% by weight.

A filter paper (Quantitative filter paper 5A, manufactured by ADVANTEC TOYO KAISHA, LTD.) was loaded into a Buchner funnel, and the graphene dispersion liquid as obtained above was gradually added dropwise while decompressing with an aspirator to separate graphene from isopropyl alcohol, depositing graphene on the filter paper. The deposit was air-dried at room temperature for 5 hours and then dried in an electric furnace set at 90°C for 8 hours to completely remove isopropyl alcohol, obtaining a solid (graphene aggregate). The solid was pulverized into a coarse particle for 15 minutes using the universal pulverizer (M20, manufactured by AS ONE Corporation) to obtain a pulverized body.

Production example 4 (production of thermally expanded graphite by continuous processing)

A thermally expanded graphite was produced by continuous processing using a device corresponding to FIG. 4. That is, using a thermally expandable graphite TEG (SS-3) manufactured by AIR WATER INC. as a raw material, in accordance with the descriptions in Table 2, in heat treatment by material-supplying/heating units, an average flow rate of each quartz glass tube (3) (outer diameter: 80 mm, inner diameter: 75 mm, length: 1,500 mm) was controlled by adjusting openings of the dilution air damper (19), the air volume adjustment damper (12), and each system damper (11) of the raw material-supplying/heating units, and an amount of heat applied to the raw material was controlled by changing the temperature of the heater of the electric furnace. An inner diameter of the exhaust system of the collecting unit (C) was 200 mm. A raw material-supplying rate was adjusted to 20 g/min.

A tap density of the obtained thermally expanded graphite was measured. The measurement of the tap density was performed in the same manner as in Production example 1, except that a PET cup with an internal volume of 487 cm$^3$ was used as a measuring cup and that an electronic scale (FX-300i) manufactured by A&D Company, Limited was used as a scale.

During heat treatment by the raw material-supplying/heating unit, whether or not the raw materials protruding from the pulse air member (6) were efficiently floating to the top without falling down was observed, and qualitative assessment was performed with circle mark ∘ for those that were successfully floating to the top, triangle mark △ for those that managed to be floating to the top, and cross mark × for those that were not successfully floating to the top. The results are shown in Table 2.

Table 2

| | Production example | | | | | | | | | | |
|---|---|---|---|---|---|---|---|---|---|---|---|
| | 4-1 | 4-2 | 4-3 | 4-4 | 4-5 | 4-6 | 4-7 | 4-8 | 4-9 | 4-10 | 4-11 |
| Raw material SS-3 (kg) | 2 | 2 | 2 | 2 | 2 | 2 | 2 | 2 | 2 | 2 | 2 |
| Raw material-supplying/heating unit Raw material-supplying speed (g/min) | 20 | 20 | 20 | 20 | 20 | 20 | 20 | 20 | 20 | 20 | 20 |
| Average flow rate ($m^3$/min) | 1.92 | 1.52 | 1.27 | 0.90 | 0.56 | 0.22 | 1.27 | 1.27 | 1.27 | 1.27 | 1.27 |
| Temperature in electric furnace (°C) | 1000 | 1000 | 1000 | 1000 | 1000 | 1000 | 600 | 700 | 800 | 900 | 1100 |
| Floating status of Raw material | ○ | ○ | ○ | Δ | Δ | × | ○ | ○ | ○ | ○ | ○ |
| Thermally expanded graphite processing speed (g/min) | 20 | 20 | 20 | 20 | 20 | - | 20 | 20 | 20 | 20 | 20 |
| Tap density | 0.05 | 0.03 | 0.03 | 0.02 | 0.02 | - | 021 | 0.12 | 0.08 | 0.04 | 0.02 |

When an average flow rate in the quartz glass tube (3) was less than 1.00 $m^3$/min, raw materials protruding from the pulse air member (6) tend to fell down to the bottom in an unexpanded state due to deteriorated efficiency of being expanded by heat and being sucked into the tube to the top. Most of the raw materials fell down to the bottom when the average flow rate was less than 0.5 $m^3$/min. Therefore, there was an appropriate balance in which the raw materials protruding from the pulsed air member (6) were sucked up into the quartz glass tube (3) and simultaneously expanded by radiant heat using a heater, and easily sucked up to the top while becoming bulky, so that, from this point of view, the conditions in Production examples 4-2 and 4-3 were appropriate. On the other hand, when the average flow rate was too high, as in, for example, Production example 4-1, an amount of radiant heat received from the heater decreased to make the expansion insufficient, resulting in a tendency that the tap density increased to some extent.

Regarding a heater temperature that most affects a degree of expansion, according to the results performed by changing the temperature from 600 to 1100°C with the other conditions being the same as in Production example 4-3 (Production examples 4-7 to 4-11), the tap density was clearly increased and the degree of expansion was deteriorated when the temperature was from 600 to 700°C. When the temperature was 800°C or higher, however, the tap density was less than 0.1 g/cm$^3$, and when the temperature was 1100°C, the tap density was decreased to 0.02 g/cm$^3$, obtaining a sufficient degree of expansion.

In the case of Production example 1, it was necessary for 5 g of raw material to be loaded into a graphite crucible, inserted into an electric furnace at 750°C, retained for 10 minutes, and then cooled after taking out the graphite crucible. Therefore, it took approximately 30 minutes or more for the processing of 5 g amount. Moreover, the once used graphite crucible needed time for cooling to room temperature since thermal expansion requires thermal shock, and the graphite crucible placed in the electric furnace needed time for increasing the actual temperature of the graphite crucible in the furnace. Therefore, it took 1 hour or more for repeating a treatment cycle under the same condition, resulting in a processing speed of approximately 5 g/hour, or 0.08 g/min. On the other hand, in the method of Production example 4 (continuous processing), it was sufficient only to pass raw materials through a quartz glass tube that had been soaked by radiant heat of the heater, therefore resulting in a processing speed of approximately 20 g/min which is the same as the raw material-supplying rate.

Production example 5 (production of pressure-molded body of thermally expanded graphite obtained by continuous processing)

According to Table 3, the thermally expanded graphite produced in Production example 4-3 was used to be processed in the same manner as in Production example 2, producing a pressure-molded body.

Table 3

|  | Production example | | | |
|---|---|---|---|---|
|  | 5-1 | 5-2 | 5-3 | 5-4 |
| Raw material (thermally expanded graphite) | | | | |
| Production example | 4-3 | 4-3 | 4-3 | 4-3 |
| Pressure-molding treatment | | | | |
| Amount of thermally expanded graphite to be charged (g) | 0.094 | 0.27 | 0.33 | 0.81 |
| Thickness (mm) | 1.35 | 1.36 | 4.20 | 2.0 |
| Pressure-molded body | | | | |
| Bulk density (g/cm$^3$) | 0.141 | 0.398 | 0.156 | 0.792 |
| Apparent density (g/cm$^3$) | 1.151 | 1.504 | 1.178 | 1.912 |
| Total porosity (%) | 93.8 | 82.4 | 93.1 | 65.0 |
| Closed porosity (%) | 49.1 | 33.4 | 47.9 | 15.4 |
| Open porosity (%) | 44.7 | 49.0 | 45.2 | 49.6 |

Example 1 (open-pore treatment of pressure-molded body in Production example 2)

According to Table 4, the pressure-molded body obtained in Production example 2 was subjected to open-pore treatment (heat treatment). The open-pore treatment was performed by placing the pressure-molded body in a small programmed electric furnace MMF-1 manufactured by AS ONE Corporation with the pressure-molded body being loaded in a graphite crucible, heating it at a predetermined temperature rising rate in an atmosphere, and then retaining it for a predetermined period of time after reaching the maximum arrival temperature. After the retaining time had elapsed, heating was stopped and the pressure-molded body was allowed to be cooled naturally.

The open-pore treatment decreased the closed porosity and increased the open porosity. It is considered that closed pores constituted by microstructures have become open pores due to dissipation of carbon which was oxidized by oxygen and moisture in the air into carbon monoxide or carbon dioxide.

Table 4

|  | Example | |
|---|---|---|
|  | 1-1 | 1-2 |
| Raw material (pressure-molded body) | | |
| Production example | 2-1 | 2-3 |
| Bulk density (g/cm$^3$) | 0.138 | 0.409 |
| Apparent density (g/cm$^3$) | 0.758 | 1.345 |
| Total porosity (%) | 93.9 | 81.9 |
| Closed porosity (%) | 66.5 | 40.5 |
| Open porosity (%) | 27.4 | 41.4 |
| Amount of open pore (cm$^3$/g) | 1.97 | 1.01 |
| Amount of open pore (cm$^3$/cm$^3$) | 0.274 | 0.414 |
| Open-pore treatment | | |
| Temperature rising rate (°C) | 10 | 10 |
| Maximum arrival temperature (°C) | 600 | 600 |
| Retention time (min) | 30 | 30 |

(continued)

| Graphene material | | |
|---|---|---|
| Bulk density (g/cm$^3$) | 0.140 | 0.350 |
| Apparent density (g/cm$^3$) | 1.645 | 1.594 |
| Total porosity (%) | 93.8 | 84.5 |
| Closed porosity (%) | 27.2 | 29.5 |
| Open porosity (%) | 66.6 | 55.0 |
| Amount of open pore (cm$^3$/g) | 4.76 | 1.57 |
| Amount of open pore (cm$^3$/cm$^3$) | 0.666 | 0.550 |

Example 2 (pressure molding of pulverized body in Production example 3)

According to Table 5, the pulverized body obtained in Production example 3 was subjected to pressure molding in the same manner as in Production example 2.

Table 5

| | Example | | |
|---|---|---|---|
| | 2-1 | 2-2 | 2-3 |
| Raw material (pulverized body) | | | |
| Production example | 3 | 3 | 3 |
| Pressure-molding treatment | | | |
| Amount of pulverized body to be charged (g) | 0.16 | 0.22 | 0.16 |
| Thickness (mm) | 1.3 | 1.3 | 1.3 |
| Graphene material | | | |
| Bulk density (g/cm$^3$) | 0.253 | 0.340 | 0.254 |
| Apparent density (g/cm$^3$) | 1.961 | 2.112 | 1.961 |
| Total porosity (%) | 88.7 | 84.8 | 88.7 |
| Closed porosity (%) | 13.3 | 6.6 | 13.2 |
| Open porosity (%) | 75.4 | 78.2 | 75.5 |
| Amount of open pore (cm$^3$/g) | 2.98 | 2.30 | 2.97 |
| Amount of open pore (cm$^3$/cm$^3$) | 0.754 | 0.782 | 0.755 |

Example 3 (open-pore treatment of graphene material in Example 2)

According to Table 6, the graphene material obtained in Example 2 was subjected to open-pore treatment in the same manner as in Example 1.

Table 6

| | Example | | | |
|---|---|---|---|---|
| | 3-1 | 3-2 | 3-3 | 3-4 |
| Raw material (graphene material) | | | | |
| Example | 2-3 | 2-3 | 2-3 | 2-3 |
| Bulk density (g/cm$^3$) | 0.254 | the | the | the |
| Apparent density (g/cm$^3$) | 1.961 | same | same | same |
| Total porosity (%) | 88.7 | as | as | as |
| Closed porosity (%) | 13.2 | on | on | on |
| Open porosity (%) | 75.5 | the | the | the |
| Amount of open pore (cm$^3$/g) | 2.97 | left | left | left |

(continued)

| | Example | | | |
|---|---|---|---|---|
| | 3-1 | 3-2 | 3-3 | 3-4 |
| Raw material (graphene material) | | | | |
| Amount of open pore ($cm^3/cm^3$) | 0.755 | | | |
| Open-pore treatment | | | | |
| Temperature rising rate (°C) | 10 | 10 | 10 | 10 |
| Maximum arrival temperature (°C) | 400 | 500 | 600 | 700 |
| Retention time (min) | 30 | 30 | 30 | 30 |
| Graphene material | | | | |
| Bulk density ($g/cm^3$) | 0.253 | 0.250 | 0.247 | 0.225 |
| Apparent density ($g/cm^3$) | 1.972 | 2.021 | 2.044 | 2.086 |
| Total porosity (%) | 88.8 | 88.9 | 89.1 | 90.0 |
| Closed porosity (%) | 12.7 | 10.6 | 9.6 | 7.7 |
| Open porosity (%) | 76.1 | 78.3 | 79.5 | 77.0 |
| Amount of open pore ($cm^3/g$) | 3.01 | 3.13 | 3.22 | 3.42 |
| Amount of open pore ($cm^3/cm^3$) | 0.761 | 0.783 | 0.795 | 0.770 |

Example 4 (open-pore treatment of pressure-molded body in Production example 5)

According to Table 7, the pressure-molded body obtained in Production example 5 was subjected to open-pore treatment in the same manner as in Example 1.

Table 7

| | Example | | |
|---|---|---|---|
| | 4-1 | 4-2 | 4-3 |
| Raw material (pressure-molded body) | | | |
| Production example | 5-1 | 5-2 | 5-4 |
| Bulk density ($g/cm^3$) | 0.141 | 0.398 | 0.792 |
| Apparent density ($g/cm^3$) | 1.151 | 1.504 | 1.912 |
| Total porosity (%) | 93.8 | 82.4 | 65.0 |
| Closed porosity (%) | 49.1 | 33.4 | 15.4 |
| Open porosity (%) | 44.7 | 49.0 | 49.6 |
| Open-pore treatment | | | |
| Temperature rising rate (°C) | 10 | 10 | 10 |
| Maximum arrival temperature (°C) | 600 | 600 | 600 |
| Retention time (min) | 30 | 30 | 60 |
| Graphene material | | | |
| Bulk density ($g/cm^3$) | 0.120 | 0.370 | 0.726 |
| Apparent density ($g/cm^3$) | 1.899 | 2.095 | 2.119 |
| Total porosity (%) | 94.8 | 83.8 | 67.9 |
| Closed porosity (%) | 16.0 | 7.3 | 6.2 |
| Open porosity (%) | 78.9 | 76.5 | 61.7 |

<Comparison between Example 1 and Example 4>

Comparing the graphene materials in Example 1 obtained by pressure-molding the thermally expanded graphites obtained by heat treatment in the graphite crucible (Production example 2) and then subjecting them to open-pore treatment (Examples 1-1 and 1-2) with the graphene materials in Example 4 obtained by pressure-molding the thermally expanded graphites obtained by heat treatment in the continuous process (Production example 5) and then subjecting them to open-pore treatment (Example 4-1 and 4-2), it can be seen that the graphene materials in Example 4 exhibited a very large effect of open-pore treatment, as shown in the Table below. For example, Example 4-1 showed a large amount of open pores of 78.9% (6.57 $cm^3$/g). It can be seen that the thermally expanded graphites produced through continuous process are excellent in graphene crystallinity, as well as advantageous for producing graphene materials with a large open porosity having a large retention capacity.

Table 8

| | Example | | | |
|---|---|---|---|---|
| | 1-1 | 4-1 | 1-2 | 4-2 |
| Raw material (pressure-molded body) | | | | |
| Production example | 2-4 | 5-1 | 2-5 | 5-2 |
| Bulk density (g/$cm^3$) | 0.139 | 0.141 | 0.409 | 0.398 |
| Apparent density (g/$cm^3$) | 0.759 | 1.151 | 1.345 | 1.504 |
| Total porosity (%) | 93.8 | 93.8 | 81.9 | 82.4 |
| Closed porosity (%) | 66.4 | 49.1 | 40.5 | 33.4 |
| Open porosity (%) | 27.4 | 44.7 | 41.4 | 49.0 |
| Amount of open pore ($cm^3$/g) | 1.97 | 3.17 | 1.01 | 1.23 |
| Amount of open pore ($cm^3$/$cm^3$) | 0.274 | 0.447 | 0.414 | 0.490 |
| Open-pore treatment | | | | |
| Temperature rising rate (°C) | 10 | 10 | 10 | 10 |
| Maximum arrival temperature (°C) | 600 | 600 | 600 | 600 |
| Retention time (min) | 30 | 30 | 30 | 30 |
| Graphene material | | | | |
| Bulk density (g/$cm^3$) | 0.140 | 0.120 | 0.350 | 0.370 |
| Apparent density (g/$cm^3$) | 1.645 | 1.899 | 1.594 | 2.095 |
| Total porosity (%) | 93.8 | 94.8 | 84.5 | 83.8 |
| Closed porosity (%) | 27.2 | 16.0 | 29.5 | 7.3 |
| Open porosity (%) | 66.6 | 78.9 | 55.0 | 76.5 |
| Amount of open pore ($cm^3$/g) | 4.76 | 6.57 | 1.57 | 2.07 |
| Amount of open pore ($cm^3$/$cm^3$) | 0.666 | 0.789 | 0.550 | 0.765 |

Experimental example 1 (sustainability)

0.1 g of fragrance (Aroma essence blue label white musk) was added dropwise to the graphene material (outer diameter: 25 mm, thickness: 2 mm) in Example 4-3, and changes in odor over time were observed. As Comparative examples, an isotropic graphite, a carbon paper that is a porous carbon fiber material, and a filter paper (Qualitative filter paper No.1) were cut out to pieces each having an outer diameter of 25 mm, their weights were matched, and similar tests were performed. Table 9 shows details of materials used in the experiment.

Table 9

| | Example | Comparative example | | |
|---|---|---|---|---|
| | 4-3 | 1 | 2 | 3 |
| Type of sample material | Graphene material | Isotropic graphite | Carbon paper | Qualitative filter paper No.1 |
| Sample material | | | | |
| Bulk density (g/$cm^3$) | 0.726 | 1.880 | 0.826 | 0.483 |
| Apparent density (g/$cm^3$) | 2.119 | 2.063 | 1.852 | 1.396 |
| Total porosity (%) | 67.9 | 16.8 | 63.5 | 70.5 |
| Closed porosity (%) | 6.2 | 8.7 | 18.1 | 38.2 |

(continued)

| | Example | Comparative example | | |
|---|---|---|---|---|
| | 4-3 | 1 | 2 | 3 |
| Type of sample material | Graphene material | Isotropic graphite | Carbon paper | Qualitative filter paper No.1 |
| Sample material<br>Open porosity (%) | 61.7 | 8.1 | 45.4 | 32.3 |

(Result)

The graphene material in Example 4-3 continued to release a sufficient odor until at least 160 hours had passed. On the other hand, the isotropic graphite in Comparative example 1 lost its odor at the latest in 15 hours, the carbon paper in Comparative example 2 lost its odor at the latest in 30 hours, and the Qualitative filter paper No. 1 in Comparative example 3 lost its odor at the latest in 60 hours. Example 4-3 showed an excellent odor persistence.

Experimental example 2 (survivability)

The graphene material in Example 4-3 (outer diameter: 25 mm, thickness: 2 mm) and the filter paper (Qualitative filter paper No.1) were cut out to pieces each having an outer diameter of 25 mm, and 10 sheets thereof were laminated (Comparative example 4), to which 0.1 g of fragrance (Aroma Essence Blue Label White Musk) was added dropwise, to measure a weight reduction rate of the fragrance decreasing as it was gradually released.

(Result)

The results are shown in Figure 5. Example 4-3 shows a higher survivability of the fragrance even when time has passed, compared with Comparative example 4.

Experimental example 3 (absorbency)

20 ml of anti-rust lubricant (MBN, available from MonotaRO Co., Ltd.) as Component 1 was charged into a glass beaker. Into this glass beaker, the graphene materials in Examples 2-1, 3-3, and 4-1, which were sample materials, and the pressure-molded bodies in Production examples 2-1 and 5-1 were charged, and each of them was put into a state of being immersed in Component 1. This glass beaker was loaded into a vacuum dryer AVO-200NS manufactured by AS ONE Corporation, and retained in a vacuum state of -0.2 MPa on a gauge display of the device at room temperature for 15 minutes, allowing for Component 1 to be sufficiently impregnated into each sample material. After released to an atmospheric pressure, the glass beaker was removed from the vacuum dryer, and each sample material was removed from the glass beaker onto a tissue paper using tweezers and left for 3 hours to absorb an excess of Component 1 onto the tissue paper. Weights of each sample material before and after impregnation were measured to calculate a volume ($cm^3$) of Component 1 absorbed into 1 $cm^3$ of each sample material.

A volume ($cm^3$) of Component 2 absorbed into 1 $cm^3$ of each sample material was calculated in the same manner as above, except that Component 1 was changed to Component 2 (machine oil emulsion (King 95 Machine, manufactured by King Engei Co., Ltd.).

The results are shown in Table 10.

Table 10

| | Example | | | Comparative example | |
|---|---|---|---|---|---|
| | 2-1 | 3-3 | 4-1 | 5 | 6 |
| Type of sample material | Graphene material | Graphene material | Graphene material | Pressure-molded body (Production example 2-1) | Pressure-molded body (Production example 5-1) |
| Sample material<br>Molding thickness (mm) | 1.3 | 1.3 | 2.0 | 1.4 | 2.0 |
| Bulk density ($g/cm^3$) | 0.253 | 0.247 | 0.120 | 0.138 | 0.141 |
| Apparent density ($g/cm^3$) | 1.961 | 2.044 | 1.899 | 0.758 | 1.151 |

(continued)

| Type of sample material | Example | | | Comparative example | |
|---|---|---|---|---|---|
| | 2-1 | 3-3 | 4-1 | 5 | 6 |
| | Graphene material | Graphene material | Graphene material | Pressure-molded body (Production example 2-1) | Pressure-molded body (Production example 5-1) |
| Sample material | | | | | |
| Total porosity (%) | 88.7 | 89.1 | 94.7 | 93.9 | 93.8 |
| Closed porosity (%) | 13.3 | 9.6 | 16.0 | 66.5 | 49.1 |
| Open porosity (%) | 75.4 | 79.5 | 78.7 | 27.4 | 44.7 |
| Amount of open pore ($cm^3/g$) | 2.98 | 3.22 | 6.558 | 1.985 | 3.482 |
| Amount of open pore ($cm^3/cm^3$) | 0.754 | 0.795 | 0.787 | 0.274 | 0.491 |
| Absorbed amount ($cm^3/cm^3$) | | | | | |
| Component 1 (MBN) | 0.733 | 0.767 | 0.758 | 0.256 | 0.476 |
| Component 2 (King 95 Machine) | 0.698 | 0.763 | 0.732 | 0.248 | 0.458 |

It can be seen that, in Examples, an amount of absorption per unit volume is significantly increased compared to Comparative examples. In particular, comparing Example 2-1 with Example 3-3, open-pore treatment yielded a higher open porosity and also an increased amount of absorption per volume.

Experimental example 4 (laser Raman spectroscopy measurement)

Using a Raman microscope XploRA manufactured by HORIBA, Ltd., a sample surface was irradiated with a laser wavelength of 532 nm at an intensity of 10 mW, and an optical spectrum was measured in a wavelength range of 100 to 3500 $cm^{-1}$.

In carbon materials such as graphene, graphite, and the like, a peak based on an Sp2 hybrid orbital of graphene (G peak) appears near 1600 $cm^{-1}$ and a peak based on an SP3 hybrid orbital of carbon (D peak) appears near 1360 $cm^{-1}$, where it is known that when crystallinity as graphite is high, G peak appears strongly, and when a large number of crystal defects are included, D peak appears. Therefore, a ratio G/D obtained by dividing a G peak intensity by a D peak intensity was calculated and used as a parameter representing crystallinity of a graphene material.

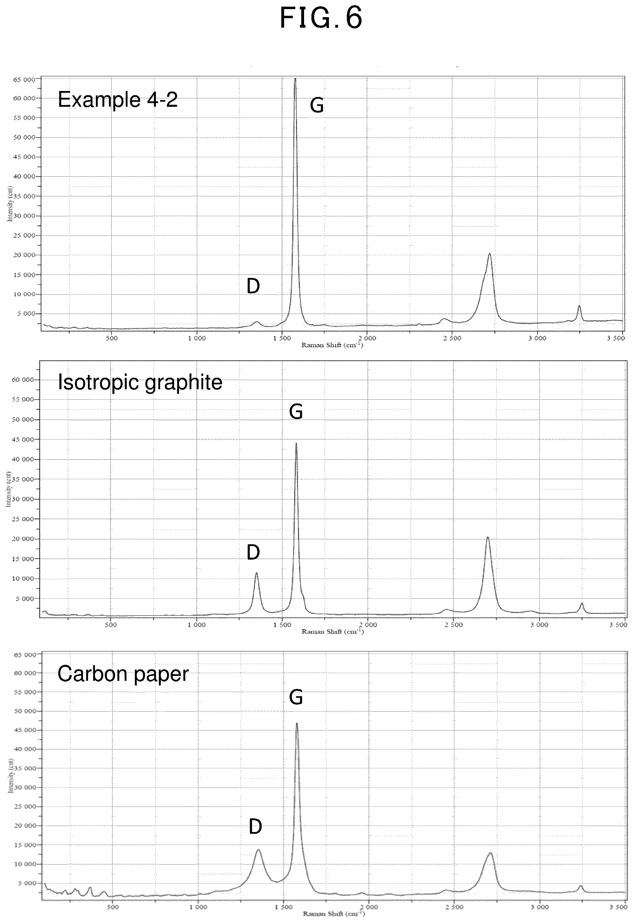

The measurement of the optical spectrum was performed at three points for one sample, and after calculating three ratios G/D, an average value thereof was defined as a ratio G/D of the sample. The results are shown in Table 11. Moreover, FIG. 6 shows results of laser Raman spectroscopy measurement for Example 4-2, Comparative example 1 (isotropic graphite), and Comparative example 2 (carbon paper).

Table 11

| Sample | G intensity | D intensity | G/D | |
|---|---|---|---|---|
| | | | Calculated value | Average value |
| Example 1-2 | 62500 | 1000 | 62.5 | 52.1 |
| | 62500 | 1200 | 52.1 | |
| | 62500 | 1500 | 41.7 | |
| Example 2-1 | 67000 | 800 | 83.8 | 53.8 |
| | 25000 | 700 | 35.7 | |
| | 46000 | 1100 | 41.8 | |
| Example 4-2 | 62500 | 1000 | 62.5 | 52.1 |
| | 62500 | 1200 | 52.1 | |
| | 62500 | 1500 | 41.7 | |

(continued)

| Sample | G intensity | D intensity | G/D | |
|---|---|---|---|---|
| | | | Calculated value | Average value |
| Comparative example 1 | 48000 | 22000 | 2.2 | 2.2 |
| | 58000 | 22500 | 2.6 | |
| | 61000 | 31000 | 2.0 | |
| Comparative example 2 | 60000 | 7000 | 8.6 | 6.4 |
| | 57500 | 10000 | 5.8 | |
| | 43000 | 9000 | 4.8 | |

INDUSTRIAL APPLICABILITY

According to the present invention, a graphene material that is lightweight, has a large retention capacity, and is useful as a base material for sustainedly releasing a non-aqueous component can be provided. Moreover, according to the present invention, a method of producing such a graphene material, particularly a producing method with a high throughput can be provided.

REFERENCE SIGNS LIST

A. Heating unit
1. Vertical tubular electric furnace
2. Heater
3. Quartz glass tube
B. Raw material-supplying unit
4. Raw material hopper
5. Screw type raw material feeder
6. Pulse air member
C. Collecting unit
7. Air hood
11. System damper
12. Air volume adjustment damper
13. Bag filter
14. Scrubber
15. Exhaust fan
16. Storage container
17. Product transporting blower
18. Transport system damper
19. Dilution air damper
20. Rotary valve

**Claims**

1. A graphene material having a total porosity of 60.0% or more and an open porosity of 50.0% or more.

2. The graphene material of claim 1, wherein a ratio G/D of a peak intensity G near 1600 cm$^{-1}$ to a peak intensity D near 1360 cm$^{-1}$ in laser Raman spectroscopy measurement is 10.0 or more.

3. A base material for sustainedly releasing a non-aqueous component, the base material being composed of the graphene material of claim 1 or 2.

4. A method of producing a graphene material having a total porosity of 60.0% or more and an open porosity of 50.0% or more, the method comprising the steps of:

(I-1) heat-treating a thermally expandable graphite to obtain a thermally expanded graphite;
(I-2) pressure-molding the thermally expanded graphite to obtain a pressure-molded body; and
(I-3) subjecting the pressure-molded body to open-pore treatment by heating to obtain a graphene material.

5. The method of claim 4, wherein the step (I-1) comprises the steps of:

(I-1-a) preparing a vertically erected tube that is surrounded by a heater to be heated inside thereof by the heater;
(I-1-b) continuously supplying the thermally expandable graphite into the tube from the lower end of the tube on an air flow;
(I-1-c) converting the thermally expandable graphite into a thermally expanded graphite by heat-treating the thermally expandable graphite while the thermally expandable graphite passing from the bottom to the top inside the tube on an air flow; and
(I-1-d) continuously obtaining the thermally expanded graphite from the upper end of the tube.

6. The method of claim 4 or 5, wherein the pressure-molded body obtained in the step (I-2) has an open porosity of less than 50.0%.

7. A method of producing a graphene material having a total porosity of 60.0% or more and an open porosity of 50.0% or more, the method comprising the steps of:

(II-1) heat-treating a thermally expandable graphite to obtain a thermally expanded graphite;
(II-2) immersing the thermally expanded graphite in a solvent, subjecting it to crushing treatment, then collecting a supernatant, and separating the solvent from the supernatant to obtain a solid, followed by pulverizing the solid to obtain a pulverized body; and
(II-3) pressure-molding the pulverized body to obtain a graphene material.

8. The method of claim 7, wherein the step (II-1) comprises the steps of:

(II-1-a) preparing a vertically erected tube that is surrounded by a heater to be heated inside thereof by the heater;
(II-1-b) continuously supplying the thermally expandable graphite into the tube from the lower end of the tube on an air flow;
(II-1-c) converting the thermally expandable graphite into a thermally expanded graphite by heat-treating the thermally expandable graphite while the thermally expandable graphite passing from the bottom to the top inside the tube on an air flow; and
(II-1-d) continuously obtaining the thermally expanded graphite from the upper end of the tube.

9. The method of claim 7 or 8, further comprising the step (II-4) of subjecting the graphene material to open-pore treatment by heating to obtain an open-pore body of the graphene material.

10. A method of producing a thermally expanded graphite, the methods comprising the steps of:

(a) preparing a vertically erected tube that is surrounded by a heater to be heated inside thereof by the heater;
(b) continuously supplying a thermally expandable graphite into the tube from the lower end of the tube on an air flow;
(c) converting the thermally expandable graphite into a thermally expanded graphite by heat-treating the thermally expandable graphite while the thermally expandable graphite passing from the bottom to the top inside the tube on an air flow; and
(d) continuously obtaining the thermally expanded graphite from the upper end of the tube.

# FIG. 1

# FIG.2

# FIG. 3

(1) Pulse air OFF        (2) Pulse air ON

# FIG.4

# FIG.5

# FIG. 6

## INTERNATIONAL SEARCH REPORT

| | |
|---|---|
| | International application No. |
| | **PCT/JP2022/024712** |

**A. CLASSIFICATION OF SUBJECT MATTER**

*C01B 32/182*(2017.01)i; *A61L 9/12*(2006.01)i; *B82Y 30/00*(2011.01)i; *C01B 32/19*(2017.01)i; *C01B 32/225*(2017.01)i; *C04B 35/52*(2006.01)i; *C04B 38/00*(2006.01)i; *C09K 3/00*(2006.01)i

FI: C01B32/182; C01B32/19; C04B35/52; C04B38/00 303Z; C09K3/00 110A; A61L9/12; C01B32/225; B82Y30/00

According to International Patent Classification (IPC) or to both national classification and IPC

**B. FIELDS SEARCHED**

Minimum documentation searched (classification system followed by classification symbols)

C01B32/00-32/991; C09K3/00; C09K3/20-3/32; C04B35/52-35/536; C04B38/00-38/10; A61K9/00-9/22 ;B82Y30/00;B82Y40/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-507365 A (OCEAN'S KING LIGHTING SCIENCE & TECHNOLOGY CO., LTD.) 27 March 2014 (2014-03-27) claims, paragraphs [0035], [0041]-[0042], [0047]-[0049] | 1-2 |
| A | | 3-10 |
| X | US 2012/0201738 A1 (KWON, Young-Jin) 09 August 2012 (2012-08-09) paragraphs [0021]-[0043], [0050]-[0061], fig. 1-3 | 4-6, 10 |
| Y | | 8 |
| A | | 1-3, 7, 9 |
| X | US 2015/0147235 A1 (IDT INTERNATIONAL CO., LTD.) 28 May 2015 (2015-05-28) paragraphs [0002]-[0003], [0006]-[0043], fig. 1, 2 | 10 |
| Y | | 8 |
| A | | 1-7, 9 |

☑ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **19 August 2022** | **30 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/024712**

| C. | DOCUMENTS CONSIDERED TO BE RELEVANT | |
|---|---|---|
| Category* | Citation of document, with indication, where appropriate, of the relevant passages | Relevant to claim No. |
| X | WO 2018/074493 A1 (INCUBATION ALLIANCE, INC.) 26 April 2018 (2018-04-26) paragraphs [0049]-[0061] | 7, 9 |
| Y | | 8 |
| A | | 1-6, 10 |
| A | JP 5-178605 A (NIPPON KASEI CHEM CO LTD) 20 July 1993 (1993-07-20) entire text | 1-10 |

Form PCT/ISA/210 (second sheet) (January 2015)

**INTERNATIONAL SEARCH REPORT**
Information on patent family members

International application No.

**PCT/JP2022/024712**

| Patent document cited in search report | | | Publication date (day/month/year) | Patent family member(s) | Publication date (day/month/year) |
|---|---|---|---|---|---|
| JP | 2014-507365 | A | 27 March 2014 | US 2013-0230709 A1 claims, paragraphs [0035]-[0064] EP 002660198 A1 claims, paragraphs [0052]-[0056] CN 10318024 A | |
| US | 2012/0201738 | A1 | 09 August 2012 | WO 2011-019095 A1 paragraphs [0021]-[0043], [0050]-[0061], fig. 1-3 CN 102471068 A KR 10-2011-0016420 A | |
| US | 2015/0147235 | A1 | 28 May 2015 | WO 2014-003251 A1 paragraphs [0001]-[0043], fig. 1, 2 | |
| WO | 2018/074493 | A1 | 26 April 2018 | US 2019-0241435 A1 paragraphs [0059]-[0072] EP 3530618 A1 paragraphs [0048]-[0061] KR 10-2019-0071739 A CN 10986317 A | |
| JP | 5-178605 | A | 20 July 1993 | (Family: none) | |

Form PCT/ISA/210 (patent family annex) (January 2015)

**EP 4 361 101 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014507365 A